# EUROPEAN PATENT SPECIFICATION

(11) **EP 1 267 628 B1**
(45) Date of publication and mention of the grant of the patent: **30.11.2005**
(21) Application number: 01919351.5
(22) Date of filing: 27.02.2001
(51) Int. Cl.: A21D 13/08, A21D 13/00

(54) **COATED BISCUIT**
BESCHICHTETER KEKS
BISCUIT ENROBE

(30) Priority: 24.03.2000 GB 0007249; 07.07.2000 GB 0016840
(43) Date of publication of application: 02.01.2003
(73) Proprietor: Société des Produits Nestlé S.A., 1800 Vevey (CH)
(72) Inventor: MYERS, Lucy, York YO31 1LA (GB); LECAT, Alec, York YO24 2XG (GB)
(74) Representative: Thomas, Alain
(86) International application number: PCT/EP2001/002206
(87) International publication number: WO 2001/072134

(56) References cited:
- WO-A-95/33386
- US-A- 4 214 012
- US-A- 4 820 533
- US-A- 5 340 598

## Description

### FIELD OF THE INVENTION

The present invention relates to a method of preparing a coated biscuit more particularly a biscuit coated with a higher moisture component (such as caramel, jam, nougat, mallow, fondant, etc) and having a barrier coating between the biscuit and the higher moisture component.

### BACKGROUND OF THE INVENTION

Biscuits, which normally contain from 1-5% moisture, coated with a higher moisture component and having a barrier coating between the biscuit and the higher moisture component are known wherein the barrier coating is usually chocolate. However, the shelf life of such coated biscuits is only about 16 weeks.

US-A-5 340 598 describes the a method for the production of substantially spherical or ellipsoidal baked goods to which are applied conventional confectionery coatings the principal ingredients of which are sugar and fat.

### SUMMARY OF THE INVENTION

We have found that the moisture migration between the dry biscuit centre component and a high moisture component coating can be retarded when the barrier coating is an icing sugar/high-melting fat mixture which can be applied substantially uniformly using a technique involving tumbling or rotating of the biscuit centre component.

According to the present invention there is provided a process for preparing a biscuit coated with a higher moisture component and having a barrier coating between the biscuit and the higher moisture component characterised in that the barrier coating is a mixture of a high-melting fat having a melting point of at least 45°C and icing sugar which comprises melting the mixture of a high-melting fat and icing sugar and applying to the biscuit using a technique in which the biscuit centre component is tumbled or rotated and finally contacting the biscuit coated with the barrier coating with the higher moisture component.

### DETAILED DESCRIPTION OF THE INVENTION

The barrier coating may be applied to the biscuit by using panning equipment, or by rotating it between soft fibres or brushes.

Panning is a process well known to those skilled in the art and is described, for example, in Industrial Chocolate Manufacture and Use, Third Edition, 1999, edited by S.T.Beckett, Blackwell Science, Chapter 15, pages 287-301. Basically, panning involves a rotating container, usually a pan or a drum, containing the centres, and the coating material is then added in a form in which it can coat the outside of the centres as they tumble over one another in the container by building up multiple layers or continuous phases.

The soft fibers or brushes enable a substantially even coating application at control temperatures and the coating may be achieved using brushing/painting equipment such as the EMT biturbine which is based on rotating the products along two helicoidal turbines contacted with the soft fibers or brushes.

The present invention also provides a biscuit coated with a higher moisture component and having a barrier coating between the biscuit and the higher moisture component characterised in that the barrier coating is a mixture of a high-melting fat having a melting point of at least 45°C and icing sugar.

The biscuit to be coated may be any kind of biscuit or cookie, e.g. shortcake, rich tea, digestive, bourbon having a moisture content of typically from 1-5 % (Aw from 0.1 to 0.5).

The fat should preferably have a relatively high-melting point. The fat which should be food-acceptable is conveniently a vegetable fat having a melting point of at least 45°C, for instance from 55°C to 100°C and preferably from 60° to 90°C. The fat is preferably hydrogenated and examples of hydrogenated fats include commercially available fats such as Cessa 60 from Karlsham's, Akofine NF, Cotebar H from Loders-Crooklaan and Confao 12 from Aahrus Olie. Hydrogenated fats may be prepared by a process well-known in the oils & fats industry using hydrogen under pressure to modify the molecular structpre of the fat to obtain various advantages such as higher melting point, better mouthfeel etc.

Information about vegetable fats can be obtained in G. Talbot, Vegetable Fats, in Industrial Chocolate Manufacture and Use, 3rd Edition, 1999, edited by S.T.Beckett, p 307 -322.

The mixture of hydrogenated fat and icing sugar advantageously contains from 15 to 50% by weight and preferably from 25 to 35% by weight of the hydrogenated fat based on the weight of the mixture. This coating is described in an article by G Talbot in Candy Industry 1991(156 [1] p53 -56) entitled Putting a Lid on Moisture Migration. This article states that the moisture barrier is only effective if the dry centre has a uniform coating. The author suggests using enrobing or spraying and notes that brushing does not work. Enrobers are however expensive and complicated machines and skilled operators are required to obtain a uniform coating particularly on the base. This type of device is known to give an uneven coating such as the « feet » shown in The Science of Chocolate by S T Beckett RSC 2000, Chapter 4 Figure 4.2. Spraying is also difficult as this is normally carried out from one direction leading to a non uniform coating. The current invention provides methods which obtain a uniform coating by rotating the dry centres and can also be carried out on relatively simple standard equipment with semi-skilled operators.

The higher moisture component in contact with the biscuit may be a confectionery material such as caramel, jam, nougat, mallow, fondant, etc. The caramel, which may be used can contain as basic ingredients, sugar, glucose syrup, milk protein, fat, salt and from 5 to 15% water The term caramel may include toffee and formulations are well known to those skilled in the art and are described, for example, in Sugar Confectionery Manufacture; Second Edition, 1995, edited by E.B. Jackson, Blackie Academic and Professional, Chapter 8 and page 289. The water activity of the caramel is preferably from 0.3 to 0.7. For clarity, it should be understood that the term "caramel" excludes products made by the breakdown of carbohydrate by heat or heat and alkali treatment, which products are predominantly used as colouring materials. The jam which may be used is advantageously a confectioner's jam, advantageously with a high fruit content for the best flavour, and it usually has a solids content of above 70%, preferably fron 75 to 78% and the Aw is preferably from 0.3 to 0.7. The coating with the higher moisture component may be continuous or discontinuous. The coated biscuit may, if desired, be finally coated with chocolate.

After application of the barrier coating, the biscuit is then contacted with the higher moisture component, e.g. depositing the biscuit in warm caramel (between 35°C and 80°C). Because of the high melting point of the fat, it is possible to expose the coated biscuit to the warm caramel without losing the integrity of the barrier therefore the biscuit will remain crisper longer.

The shelf life at ambient temperature of biscuits traditionally coated with a chocolate barrier in contact with a higher moisture component is typically about 16 weeks. We have found that the same product coated with the high melting fat barrier according to our invention may have a shelf life of up to double this period, e.g. 32 weeks.

### EXAMPLES

The following Examples further illustrates the present invention. Parts and percentages are given by weight.

### EXAMPLE 1

To a shortcake biscuit comprising wheat flour, vegetable fat, sugars and raising agents there is applied a barrier coating comprising 75% Cotebar H (a fractionated, hydrogenated vegetable fat) and 25% icing sugar using a panning technique as described above. In all cases when the samples were cut in half the barrier was observed to be uniform.. Afterwards, the biscuit is deposited in warm caramel in a chocolate mould. The coated biscuit had a shelf life of 32 weeks at ambient temperature.

### EXAMPLE 2

To a crunch biscuit comprising wheat flour, vegetable fat, syrup, sugars and raising agents, there is applied a barrier coating comprising 70% Cessa 60 (a hydrogenated vegetable fat) using an alternative panning such as EMT biturbine which involves rotating products along two helicoidal turbines with soft fibers enabling even coating application at control temperatures. In all cases when the samples were cut in half the barrier was observed to be uniform. Afterwards the biscuit is deposited in warm jam in a chocolate mould. The crunchiness of the biscuit is significantly improved over its shelflife.

## Claims

1. A process for preparing a biscuit coated with a higher moisture component and having a barrier coating between the biscuit and the higher moisture component **characterised in that** the barrier coating is a mixture of a high-melting fat having a melting point of at least 45°C and icing sugar which comprises melting the mixture of a high-melting fat and icing sugar and applying to the biscuit using a technique in which the centre component is tumbled or rotated and finally contacting the biscuit coated with the barrier coating with the higher moisture component.

2. A process according to claim 1 wherein the barrier coating is applied to the biscuit by using panning equipment.

3. A process according to claim 1 wherein the barrier coating is applied to the biscuit by rotating it between soft fibres or brushes.

4. A biscuit whenever obtainable by a process according to any of the preceding claims.

5. A biscuit coated with a higher moisture component and having a barrier coating between the biscuit and the higher moisture component **characterised in that** the barrier coating is a mixture of a high-melting fat having a melting point of at least 45°C and icing sugar.

6. A biscuit according to claim 5 wherein the biscuit to be coated has a moisture content of from 1 to 5% by weight.

7. A biscuit according to claim 5 wherein the high-melting fat is a vegetable fat having a melting point of from 45°C to 100°C.

8. A biscuit according to claim 5 wherein the mixture of high-melting fat and icing sugar contains from 15 to 50% by weight of high-melting fat based on the weight of the mixture.

9. A biscuit according to claim 5 wherein the high-melting fat is a hydrogenated fat.

10. A biscuit according to claim 5 wherein the higher moisture component is a caramel, jam, nougat, mallow or fondant.

11. A biscuit according to claim 10 wherein the caramel that is in contact with the biscuit contains as basic ingredients, sugar, glucose syrup, milk protein, fat, salt and from 5 to 15% water.

## Patentansprüche

1. Verfahren zur Herstellung eines Kekses, der mit einem Bestandteil mit einem höheren Feuchtigkeitsgehalt überzogen ist und einen Barriereüberzug zwischen dem Keks und dem Bestandteil mit dem höheren Feuchtigkeitsgehalt aufweist, **dadurch gekennzeichnet, daß** der Barriereüberzug eine Mischung aus einem hochschmelzenden Fett mit einem Schmelzpunkt von wenigstens 45°C und Staubzucker ist, das das Schmelzen der Mischung aus einem hochschmelzenden Fett und Staubzucker und das Aufbringen auf den Keks unter Verwendung einer Technik, bei der der zentrale Bestandteil getumbelt oder rotiert wird, und abschließend das Inkontaktbringen des mit dem Barriereüberzug überzogenen Kekses mit dem Bestandteil mit höherem Feuchtigkeitsgehalt umfaßt.

2. Verfahren nach Anspruch 1, wobei der Barriereüberzug **dadurch** auf den Keks aufgebracht wird, daß man eine Dragierausrüstung verwendet.

3. Verfahren nach Anspruch 1, wobei der Barriereüberzug **dadurch** auf den Keks aufgebracht wird, daß man ihn zwischen weichen Fasern oder Bürsten rotiert.

4. Keks, wenn er nach einem Verfahren nach irgendeinem der vorausgehenden Ansprüche erhältlich ist.

5. Mit einem Bestandteil mit einem höheren Feuchtigkeitsgehalt überzogener Keks mit einem Barriereüberzug zwischen dem Keks und dem Bestandteil mit dem höheren Feuchtigkeitsgehalt, **dadurch gekennzeichnet, daß** der Barriereüberzug eine Mischung aus einem hochschmelzenden Fett mit einem Schmelzpunkt von wenigstens 45°C und Staubzucker ist.

6. Keks nach Anspruch 5, wobei der zu überziehende Keks einen Feuchtigkeitsgehalt von 1 bis 5 Gew.-% aufweist.

7. Keks nach Anspruch 5, wobei das hochschmelzende Fett ein Pflanzenfett mit einem Schmelzpunkt von 45°C bis 100°C ist.

8. Keks nach Anspruch 5, wobei die Mischung aus dem hochschmelzenden Fett und dem Staubzucker von 15 bis 50 Gew.-% hochschmelzendes Fett, bezogen auf das Gewicht der Mischung, enthält.

9. Keks nach Anspruch 5, wobei das hochschmelzende Fett ein hydriertes Fett ist.

10. Keks nach Anspruch 5, wobei der Bestandteil mit dem höheren Feuchtigkeitsgehalt Karamel, Konfitüre, Nougat, Schaumzucker oder Fondant ist.

11. Keks nach Anspruch 10, wobei der Karamel, der mit dem Biskuit in Berührung kommt, als Grundbestandteile Zucker, Glucosesirup, Milchprotein, Fett, Salz und von 5 bis 15 % Wasser enthält.

## Revendications

1. Procédé pour la préparation d'un biscuit enrobé avec un constituant à teneur en humidité plus élevée et ayant un enrobage servant de barrière entre le biscuit et le constituant à teneur en humidité plus élevée, **caractérisé en ce que** l'enrobage servant de barrière est un mélange d'une matière grasse à haut point de fusion ayant un point de fusion d'au moins 45°C et de sucre glace, qui comprend la fusion du mélange d'une matière grasse à haut point de fusion et de sucre glace et l'application au biscuit en utilisant une technique dans laquelle le constituant central est agité au tambour ou soumis à une rotation, et finalement la mise en contact du biscuit enrobé de l'enrobage servant de barrière avec le constituant à teneur en humidité plus élevée.

2. Procédé suivant la revendication 1, dans lequel l'enrobage servant de barrière est appliqué au biscuit en utilisant un dispositif de dragéification.

3. Procédé suivant la revendication 1, dans lequel l'enrobage servant de barrière est appliqué au biscuit en le soumettant à une rotation entre des fibres ou brosses souples.

4. Biscuit, chaque fois qu'il peut être obtenu par un procédé suivant l'une quelconque des revendications précédentes.

5. Biscuit enrobé avec un constituant à teneur en humidité plus élevée et ayant un enrobage servant de barrière entre le biscuit et le constituant à teneur en humidité plus élevée, **caractérisé en ce que** l'enrobage servant de barrière est un mélange d'une matière grasse à haut point de fusion ayant un point de fusion d'au moins 45°C et de sucre glace.

6. Biscuit suivant la revendication 5, dans lequel le biscuit à enrober a une teneur en humidité de 1 à 5 % en poids.

7. Biscuit suivant la revendication 5, dans lequel la matière grasse à haut point de fusion est une matière grasse végétale ayant un point de fusion de 45°C à 100°C.

8. Biscuit suivant la revendication 5, dans lequel le mélange de matière grasse à haut point de fusion et de sucre glace contient 15 à 50 % en poids de matière grasse à haut point de fusion sur la base du poids du mélange.

9. Biscuit suivant la revendication 5, dans lequel la matière grasse à haut point de fusion est une matière grasse hydrogénée.

10. Biscuit suivant la revendication 5, dans lequel le constituant à teneur en humidité plus élevée est un caramel, de la confiture, du nougat, de la guimauve ou un fondant.

11. Biscuit suivant la revendication 10, dans lequel le caramel qui est en contact avec le biscuit contient comme ingrédients de base du sucre, du sirop de glucose, de la protéine de lait, une matière grasse, du sel et 5 à 15 % d'eau.
